# FASCICULE DE BREVET EUROPEEN

(11) **EP 3 196 372 B1**
(45) Date de publication et mention de la délivrance du brevet: **14.11.2018**
(21) Numéro de dépôt: 17152065.3
(22) Date de dépôt: 18.01.2017
(51) Int. Cl.: E04B 1/80, E04B 1/74, E04F 13/08, E04F 13/14, E04F 19/08, E04F 13/18

(54) **SYSTÈME ET PROCÉDÉ D'ISOLATION THERMIQUE, UTILISANT DES PANNEAUX COMPOSITES POUR DÉFINIR UNE COUCHE ISOLANTE D'ÉLÉMENTS PIV**
WÄRMEDÄMMSYSTEM UND -VERFAHREN, BEI DEM VERBUNDPANEELE ZUR DEFINITION EINER DÄMMSCHICHT FÜR VIP-ELEMENTE VERWENDET WERDEN
SYSTEM AND METHOD FOR HEAT INSULATION, USING COMPOSITE PANELS TO DEFINE AN INSULATING LAYER OF VIP ELEMENTS

(30) Priorité: 21.01.2016 FR 1650462
(43) Date de publication de la demande: 26.07.2017
(73) Titulaire: Electricité de France, 75008 Paris (FR)
(72) Inventeur: LABBE, Sébastien, 77210 Avon (FR); PETIOT, Philippe, 77670 Saint Mammes (FR); COLMET DAAGE, Mathilde, 77300 Fontainebleau (FR); DUFORESTEL, Thierry, 77250 Moret Sur Loing (FR); BERNARD, Jean-David, 77190 Dammarie Les Lys (FR)
(74) Mandataire: Cabinet Plasseraud

(56) Documents cités:
- WO-A1-2014/095277
- DE-A1- 10 310 353
- DE-U1-202004 010 695
- DE-U1-202006 012 469

## Description

La présente invention concerne, dans le domaine du bâtiment, les installations d'isolation thermique utilisées pour le doublage de paroi. L'invention se rapporte plus particulièrement aux systèmes de doublage qui incorporent une couche isolante formée d'éléments isolants de type PIV (Panneau Isolant sous Vide), et au moins un parement typiquement rigide ou des éléments rigides analogues de recouvrement qui définissent une surface plane. L'invention concerne également un procédé de doublage d'une paroi. WO 2014/095277 traite de tels sujets.

Les éléments PIV comprennent de façon connue en soi un matériau de coeur poreux isolant (par exemple à structure micro-cellulaire ou nano-cellulaire à cellules ouvertes) maintenu sous vide par une enveloppe barrière garantissant l'étanchéité aux gaz. L'enveloppe barrière est souple et intègre généralement un film thermo-soudable. Ces panneaux forment des plaques typiquement rigides, d'épaisseur sensiblement constante, et présentent de grandes tailles, par exemple 600 mm de largeur et 1200 mm de longueur (d'autres largeur, par exemple de 100, 300 mm, 400, 500 jusqu'à à 1200 mm étant bien entendu disponibles, la longueur variant généralement entre 500 et 2000 mm). La taille de ces panneaux conviendrait donc pour le recouvrement de parois de bâtiments à des fins d'isolation thermique. De plus, la performance thermique de ces panneaux élémentaires conduit à des épaisseurs qui peuvent être réduites pour minimiser l'encombrement du système d'isolation thermique, l'épaisseur d'un panneau pouvant être inférieure à 60 mm, et de préférence inférieure ou égale à 35 mm.

Dans le domaine, on qualifie de super isolants thermiques des matériaux présentant, à température ambiante, un niveau de conductivité thermique inférieure à 25 mW m⁻¹ K⁻¹. Les panneaux PIV ont une conductivité thermique inférieure à 7 mW m⁻¹ K⁻¹, et plus préférentiellement inférieure à 5 mW m⁻¹ K⁻¹.

Dans les panneaux élémentaires de type PIV, tous les gaz présents sont évacués du matériau poreux super isolant avant un conditionnement sous vide au sein d'une enveloppe barrière souple généralement constituée (de façon connue en soi) d'un film thermo-soudable pouvant être métallisé qui permet en outre d'éviter la formation de ponts thermiques au niveau des tranches.

L'utilisation de tels panneaux élémentaires pour réaliser une installation d'isolation thermique est cependant délicate du fait que l'enveloppe barrière (très mince) est fragile. Ce type de panneau ne tolère pas d'efforts de compression ou de flexion qui sont susceptibles d'allonger localement l'enveloppe et de dégrader ses propriétés de barrière aux gaz.

La taille relativement importante des panneaux et leur très faible conductivité thermique sont des atouts de performance d'isolation thermique très importants qui peuvent toutefois être considérablement réduits si l'écartement entre deux panneaux adjacents est trop important (problématique des ponts thermiques) et/ou si de l'air peut circuler au niveau des jonctions (problématique associée d'étanchéité à l'air des isolants thermiques de parois de bâtiments).

Un perçage de l'enveloppe barrière aussi minime soit-il provoque la perte du vide à l'intérieur de l'enveloppe conduisant à une baisse très significative des performances thermiques des panneaux, la conductivité thermique pouvant alors augmenter d'un facteur trois ou quatre, voire au-delà si de la vapeur d'eau pénètre également dans l'enveloppe (de l'ordre de 20 mW m⁻¹ K⁻¹ ou plus au lieu de 5 à 7 mW m⁻¹ K⁻¹ pour un panneau isolant sous vide intact).

Pour faciliter la pose des panneaux en limitant les risques de dégradation et minimisant les ponts thermiques, il a été proposé dans le document DE 10226188A1 d'utiliser des plaques rigides attachées de part et d'autre du panneau isolant à l'aide de sangles. La pose peut en outre être simplifiée en ajoutant des plaques externes décalées par rapport au volume de l'ensemble sanglé, de façon à former des reliefs d'emboîtement. Cette solution tend à limiter les ponts thermiques car seules des sangles minces sont insérées entre les tranches des panneaux.

Cependant pour permettre de former les reliefs d'emboîtement, il est nécessaire de prévoir quatre couches en sus de la couche isolante formée par les panneaux de type PIV, ce qui augmente considérablement en pratique l'épaisseur globale du panneau composite décrit dans ce document.

Il est connu par ailleurs, par le document CA 2255988, une cloison constituée de panneaux composites dont l'enveloppe métallique présente, sur deux tranches, deux reliefs opposés dont l'un forme une languette et l'autre une rainure d'insertion pour une languette. L'assemblage des panneaux composites est facilité par la présence d'un mécanisme de verrouillage, consistant en une fente latérale et une nervure de maintien formée sur une extension d'une surcouche collée sur l'enveloppe rigide. Lors de l'emboîtement de la languette d'un premier panneau dans une rainure d'un deuxième panneau adjacent, la nervure de maintien peut s'engager dans la fente latérale en vis-à-vis.

Un inconvénient du procédé de montage décrit dans CA 2255988 est qu'il est non adapté à l'utilisation de panneaux de type PIV. Ce document vise seulement à isoler avec un matériel de remplissage tel que de la mousse, qui n'a pas des performances d'isolation comparables à un panneau de type PIV. En outre, le positionnement de la nervure de maintien peut faire perdre du temps et nécessite l'adjonction d'une surcouche flexible (par exemple en textile ou non-tissé) du côté de l'intérieur de la pièce. Une telle couche ne forme pas ou ne permet pas de supporter une finition rigide, contrairement à des plaques en plâtre, faïence ou revêtement analogue. Il est donc nécessaire en pratique de réaliser une finition ultérieurement.

Il existe donc un besoin pour un mode de montage d'une cloison isolante qui permet d'intégrer efficacement et de manière simple des panneaux élémentaires de type PIV, sans risque de dégradation par des éléments de fixation (vis) et/ou l'utilisation d'outils dans les zones de jonction entre les éléments PIV, notamment pour des applications de contrecloison de grande surface dans un bâtiment, avec une flexibilité et facilitant la tâche de l'opérateur.

Il apparaît également intéressant de pouvoir fournir des équipements et/ou des fonctionnalités usuelles d'habitat dans une cloison à haute performance d'isolation thermique, sans pour autant risquer de dégrader l'un des éléments PIV de la cloison.

La présente invention a notamment pour but de pallier tout ou partie des inconvénients précités.

A cet effet, il est proposé selon l'invention un système d'isolation thermique destiné à recouvrir une paroi d'un bâtiment, comportant des panneaux composites emboîtables et définissant quatre bords, de façon à définir des rangées dont une rangée déterminée dans laquelle chacun des panneaux composites comprend un ensemble tri-couche qui inclut :
- un élément isolant ayant une forme de plaque avec quatre côtés dont deux côtés opposés parallèles, l'élément comprenant un matériau poreux résistant à la compression, de préférence rigide, et une enveloppe barrière étanche aux gaz, fermée sous vide, qui renferme le matériau poreux ;
- une plaque de fixation, rigide, destinée à être placée entre la paroi et une couche isolante formée par les éléments isolants, la plaque de fixation s'étendant entièrement en dehors de la couche isolante ;
- une plaque de recouvrement parallèle à la plaque de fixation et s'étendant entièrement en dehors de la couche isolante, la plaque de recouvrement se décomposant en deux pièces complémentaires, comprenant :
- un organe fixe contre une face de l'élément isolant ; et
- un élément de plaque amovible par rapport à l'élément isolant ; et
- des moyens d'emboîtement sur au moins une partie de la périphérie latérale du panneau composite (périphérie latérale définie par l'ensemble tricouche) ;
sachant que les plaques de recouvrement du système constituent un ensemble monocouche adapté pour recouvrir la couche isolante et définir une face commune orientée à l'opposé de la paroi,
et que dans la rangée déterminée ou dans une rangée adjacente, le système est pourvu d'une plaque de recouvrement spécifique, qui recouvre une matière thermiquement isolante de conductivité inférieure ou égale à 50 mW m⁻¹ K⁻¹ et qui comprend :
- un évidement ou une découpe pour une liaison électrique, téléphonique, optique ou fluidique, permettant de faire fonctionner un organe fonctionnel qui est intégré au moins en partie dans la plaque de recouvrement spécifique ou dans une plaque de recouvrement adjacente ; et
- un bord de jonction en contact avec un panneau composite de la rangée déterminée.

Ainsi, les éléments isolants de type PIV sont maintenus espacés de la paroi à isoler (qui peut présenter des zones irrégulières susceptibles de percer l'enveloppe barrière de l'élément isolant) et les panneaux composites, de même épaisseur, sont simples à assembler pour définir un système d'aspect continu. L'unique couche de recouvrement, qui définit la face extérieure du système est :
- typiquement une couche de finition, ce qui permet de limiter l'épaisseur globale du système d'isolation thermique, et
- apte à intégrer (en partie au moins) une ou plusieurs fonctionnalités, par exemple une prise d'alimentation électrique, une arrivée d'eau, un dispositif lumineux et/ou chauffant.

En outre, le fait de prévoir des panneaux composites emboîtables limite les ponts thermiques tout en facilitant les opérations de démontage individuel qui peuvent être alors envisagées. On comprend que les panneaux composites peuvent être récupérés le cas échéant après un tel démontage.

Grâce à ces dispositions, des panneaux composites qui incluent une couche intermédiaire à base de super isolant sous vide de type standard (avec une enveloppe barrière fragile) peuvent être mis en oeuvre pour isoler des bâtiments existants, sans recours à une lame d'air ou à des éléments de fixation (vis, tasseaux, ossature) qui interfèrent avec la couche isolante.

La plaque de recouvrement spécifique peut jouer le rôle d'une plaque de finition et recouvre par exemple une matière isolante (complétant la couche d'isolation à base d'éléments PIV) très performante, de conductivité inférieure ou égale à 50 mW m⁻¹ K⁻¹ (et de préférence inférieure à 30 mW m⁻¹ K⁻¹).

Selon une particularité, les éléments de type PIV sont jointifs sans couche intercalaire entre leurs tranches dans la couche isolante.

Selon une particularité, dans chaque panneau composite, les plaques de fixation et de recouvrement sont maintenues solidaires contre une face d'un élément isolant de type PIV, par exemple par une colle sans solvant.

De préférence, les moyens d'emboîtement comportent au moins deux reliefs d'emboîtement. L'un de ces deux reliefs peut être situé du côté d'un premier bord externe du panneau composite et défini par un positionnement en saillie d'un élément isolant par rapport à un bord libre de la plaque de recouvrement et à un bord libre de la plaque de fixation, et l'autre situé du côté d'un deuxième bord externe du panneau composite opposé au premier bord externe. On peut former un ou deux débords sur les différents côtés du panneau composite, ce qui facilite le maintien de ces panneaux lors de leur pose.

Dans divers modes de réalisation du système selon l'invention, on peut éventuellement avoir recours en outre à une ou plusieurs des dispositions suivantes :
- le système comprend un câble, une ligne ou un tuyau qui traverse une couche d'isolation définie par les panneaux composites et définit tout ou partie de la liaison intégrée dans la plaque de recouvrement spécifique.
- la liaison traverse la couche d'isolation dans une zone qui est soit une jonction entre deux tranches d'éléments isolants de deux panneaux composites emboîtés entre eux, soit une découpe décalée par rapport à la rangée déterminée de façon à ne pas interférer avec les enveloppes des éléments isolants (panneaux PIV) .
- la couche d'isolation traversée par la liaison est au moins en partie définie par les panneaux composites, et la liaison traverse une découpe formée dans un élément isolant à pression atmosphérique adjacent à un panneau PIV, par exemple un élément SIPA (Super Isolant à Pression Atmosphérique) incluant des aérogels de silice ou un matériau d'isolation thermique alvéolaire rigide.
- le bord de jonction est défini par une extrémité (de la plaque de recouvrement) qui recouvre au moins un élément isolant (panneau PIV) appartenant à la rangée déterminée.
- le système comporte, de préférence le long d'un substrat du bâtiment, un panneau ou module composite qui inclut la plaque de recouvrement spécifique et dont la matière isolante est traversée par des logements pour le passage d'au moins un composant électrique et/ou d'au moins une conduite hydraulique.
- la plaque de recouvrement spécifique fait partie d'un ensemble tricouche (qui définit un module) spécifique configuré pour s'emboîter avec un des deux reliefs d'emboîtement présents dans les panneaux composites de la rangée déterminée et recouvre directement une plaque isolante dont le matériau constitutif est à pression atmosphérique.
- la plaque isolante est prise en sandwich entre une plaque de fixation et une plaque de recouvrement et présente une tranche non alignée par rapport à la plaque de fixation et/ou la plaque de recouvrement, cette tranche étant accolée directement contre l'élément isolant qui conserve un vide dans une configuration emboîtée du module spécifique contre la rangée déterminée.
- la plaque isolante et la plaque de recouvrement spécifique incorporent, dans un évidement ou un perçage traversant, l'organe fonctionnel qui est choisi parmi un équipement de prise électrique et/ou de câble de communication, un organe chauffant et un organe lumineux.
- le relief situé du côté du deuxième bord externe est défini par un positionnement en retrait de l'élément isolant par rapport à un bord libre de la plaque de recouvrement et à un bord libre de la plaque de fixation.
- la plaque de recouvrement spécifique est adaptée pour incorporer au moins en partie l'organe fonctionnel (ce dernier pouvant être choisi parmi un équipement de prise électrique et/ou de câble de communication, un organe chauffant et un organe lumineux).
- dans la rangée déterminée, la plaque de recouvrement comporte :
   o un bord de section concave pour former une rainure, en position adjacente à l'un des deux reliefs d'emboîtement, et
   o un bord de section convexe pour s'engager dans une rainure d'une plaque de recouvrement adjacente, du côté de l'autre des deux reliefs d'emboîtement.
- chaque plaque de recouvrement de la rangée déterminée recouvre un des éléments isolants à l'exception d'une ou plusieurs parties en saillie et le bord de section concave de la plaque de recouvrement est adjacent à une partie en saillie de l'élément isolant recouvert par la plaque de recouvrement.
- chaque plaque de recouvrement de la rangée déterminée recouvre un des éléments isolants à l'exception d'une ou plusieurs parties en saillie et le bord de section convexe de la plaque de recouvrement est adjacent à une partie en saillie de l'élément isolant recouvert par la plaque de recouvrement.
- la plaque de recouvrement est transparente ou translucide pour au moins un des panneaux composites.
- la plaque de recouvrement a une épaisseur comprise entre 3 et 20 mm et est de préférence plus épaisse que la plaque de fixation.
- l'épaisseur de la plaque de fixation est inférieure ou égale à 10 mm et la plaque de fixation peut définir une face du panneau composite distante de la face commune de moins de 50 mm.
- le système comporte un profilé à section en U ou éventuellement en L, rigidement fixé à un substrat du bâtiment, ce profilé formant une cavité dont la largeur est inférieure à l'épaisseur des panneaux composites, afin de recevoir sélectivement des extrémités en saillie définies par les éléments isolants (lorsque le profilé est en L, il est placé contre une paroi du bâtiment pour délimiter l'arrière de la cavité).
- la face commune est plane et définit une finition, les plaques de recouvrement étant rigides et choisies dans au moins un parmi les matériaux suivants : mélaminé, verre, bois, revêtement plastique, brique, pierre, céramique.
- une couche de matériau compressible est ajoutée à une jonction entre deux éléments isolants PIV, soit sur la tranche des PIV, soit sur la face de contact d'une plaque destinée à venir en contact contre la partie en saillie d'un élément PIV intégré dans un panneau composite adjacent.
- une couche de matériau compressible est ajoutée à la jonction, soit sur la tranche des PIV, soit sur la face de contact d'une plaque destinée à venir en contact contre la partie en saillie d'un PIV d'un panneau composite adjacent.
- le système comprend une couche de finition accolée contre la face commune et qui présente des éléments opaques au moins en partie détachables, les plaques de recouvrement étant transparentes pour permettre d'inspecter visuellement un état fonctionnel des éléments isolants dans une configuration au moins partiellement détachée des éléments opaques.

Par ailleurs, l'invention a également pour objet un procédé de montage pour réaliser le système d'isolation thermique selon l'invention à partir de panneaux composites emboîtables et définissant quatre bords.

Plus particulièrement, ce procédé de montage comprend les étapes qui consistent essentiellement à :
- fournir au moins une première série de panneaux composites pourvus chacun d'un élément isolant ayant une forme de plaque avec quatre côtés ou tranches dont deux côtés opposés parallèles, l'élément isolant comprenant un matériau poreux résistant à la compression, de préférence rigide, et une enveloppe barrière externe étanche aux gaz, fermée sous vide, qui renferme le matériau poreux, sachant qu'une première face de l'élément isolant est protégée par une plaque de fixation, rigide, destinée à être placée entre la paroi et une couche isolante formée par les éléments isolants, tandis qu'une deuxième face de l'élément isolant est protégée par une plaque de recouvrement parallèle à la plaque de fixation, ladite plaque de recouvrement se décomposant en deux pièces complémentaires, comprenant un organe fixe contre ladite deuxième face de l'élément isolant, et un élément de plaque amovible par rapport à l'élément isolant ;
- emboîter entre eux les panneaux composites de la première série, par engagement entre des reliefs d'emboîtement de type fente et languette, l'un au moins des reliefs d'emboîtement étant défini par un positionnement en saillie d'un élément isolant par rapport à un bord libre de la plaque de recouvrement et à un bord libre de la plaque de fixation dans le même panneau composite, de façon à former une rangée déterminée tricouche ;
- définir à l'aide des plaques de recouvrement de la rangée déterminée, une face commune qui s'étend parallèlement à la paroi à recouvrir ; et
- dans la rangée déterminée ou dans une rangée adjacente, utiliser une plaque de recouvrement spécifique, qui recouvre une matière thermiquement isolante de conductivité inférieure ou égale à 50 mW m⁻¹ K⁻¹ et dans laquelle un évidement ou une découpe pour une liaison électrique, téléphonique, optique ou fluidique, est formé pour installer un organe fonctionnel qui est de préférence intégré au moins en partie dans la plaque de recouvrement spécifique ou dans une plaque de recouvrement adjacente ; et
- mettre en contact un bord de jonction de la plaque de recouvrement spécifique avec un panneau composite de la rangée déterminée.

Le procédé permet avantageusement de former une couche à base de panneaux PIV qui peut être continue au moins dans une rangée est qui est simple à assembler sur le chantier. La paroi isolée est bien étanche à l'air et on peut directement avoir une finition par la surface externe formée par les plaques de recouvrement.

D'autres caractéristiques et avantages de l'invention apparaîtront au cours de la description suivante de plusieurs de ses modes de réalisation, donnés à titre d'exemples non limitatifs, en regard des dessins joints dans lesquels :
- la figure 1 est une vue en coupe verticale illustrant une première forme de réalisation particulière d'un système de doublage d'une paroi d'un bâtiment à des fins d'isolation thermique ;
- la figure 2 montre un détail de la jonction entre deux panneaux composites, dans une forme de réalisation préférée ;
- la figure 3 illustre un mode d'assemblage entre des panneaux composites pour former une rangée formée à une extrémité latérale du système ;
- la figure 4A illustre, avant la pose des panneaux composites, un exemple d'ossature définie le long d'un sol au bas de la paroi à doubler et à une extrémité latérale du système d'isolation ;
- la figure 4B est une vue similaire à la figure 4A, montrant un premier panneau installé dans l'ossature pour former le bas d'une rangée ;
- la figure 5 représente une forme de réalisation particulière d'un système d'isolation conforme à l'invention, en cours d'installation pour doubler une paroi d'un bâtiment ;
- la figure 6 illustre un exemple de configuration d'un premier panneau installé en bas d'une rangée verticale, adapté pour l'emboîtement d'un panneau composite incluant un élément isolant fragile de type PIV ;
- la figure 7 illustre un assemblage d'un panneau composite, avec l'élément de type PIV intercalé entre deux plaques ;
- la figure 8 est une vue en coupe verticale illustrant un exemple de configuration d'un panneau composite, adapté pour l'emboîtement d'un panneau composite complémentaire.

Sur les différentes figures, les mêmes références désignent des éléments identiques ou similaires.

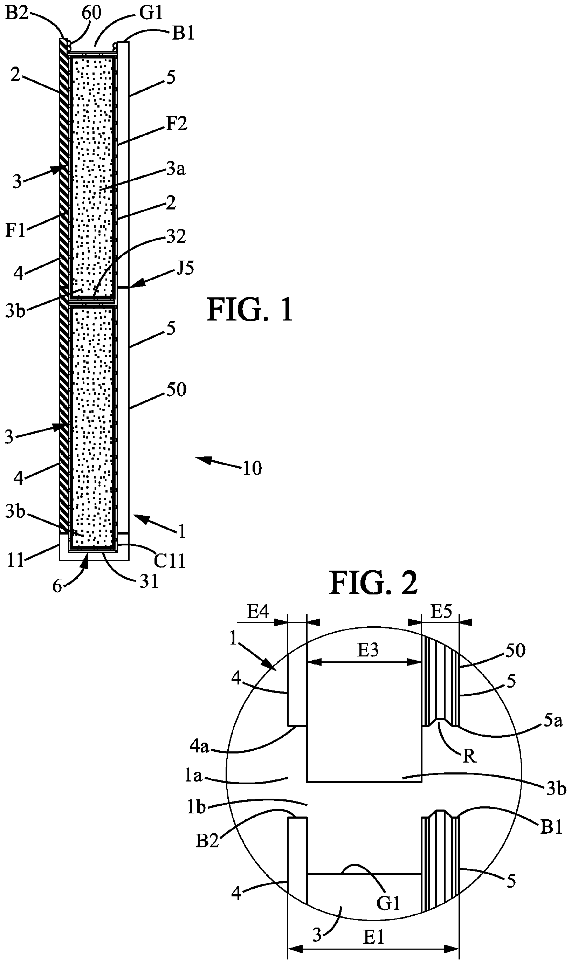

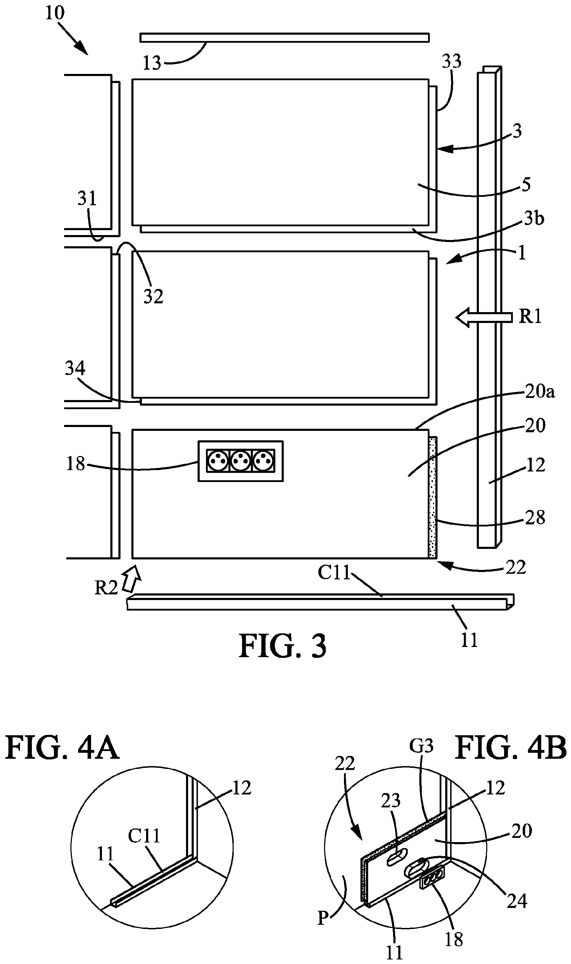

En référence aux figures 1 et 2, le panneau composite 1 d'isolation thermique comporte au moins un élément super isolant 3 de type PIV (de format typiquement standard) ayant un format parallélépipédique avec la même épaisseur E3 (cette épaisseur E3 étant typiquement la plus petite des dimensions des éléments super isolants 3). L'élément 3 a donc une forme de plaque et présente deux faces principales F1 et F2 et quatre tranches 31, 32, 33, 34 (voir figure 3), avec ici deux tranches opposées 31, 32 qui sont de préférence parallèles pour former les extrémités inférieure et supérieure de l'élément 3. Le matériau poreux 3a présent à l'intérieur de l'enveloppe barrière 2 est résistant à la compression (il est typiquement rigide, contrairement au film souple formant l'enveloppe barrière 2). Le matériau poreux 3a est enfermé sous vide par l'enveloppe barrière 2 étanche aux gaz. L'enveloppe barrière 2 se rétracte sur ce matériau poreux 3a lorsque celle-ci est soumise extérieurement à la pression atmosphérique.

On comprend que le matériau poreux 3a définit de préférence au moins 90% de l'épaisseur totale E3 de l'élément 3 de type PIV, sachant que l'enveloppe barrière 2 est constituée d'un film étanche très mince (généralement multicouche) dont l'épaisseur est très inférieure à 1 mm, et typiquement inférieure à 0,2 mm. L'élément 3, dépourvu de protection mécanique, a par exemple une épaisseur E3 typiquement inférieure ou égale à 35 ou 40 mm.

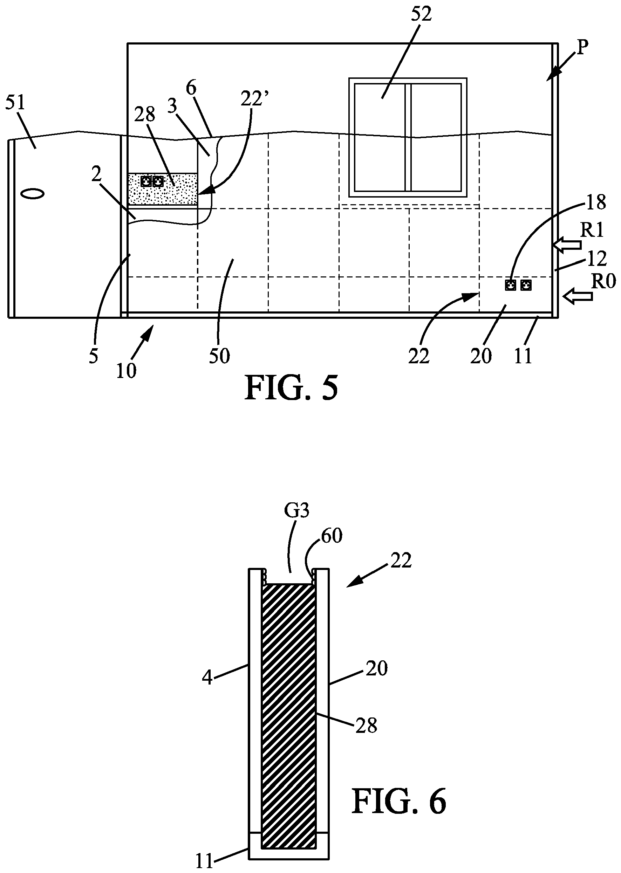

En référence aux figures 1 et 5, les panneaux composites 1 dans l'état assemblé comportent une couche à l'arrière et une couche à l'avant de la couche isolante 6 (avec conservation d'un vide) définie par les éléments super isolants 3. Dans le cas d'une application de doublage d'une paroi P, des plaques de fixation 4, rigides, forment la couche à l'arrière. Dans cet exemple, la couche isolante 6 a une épaisseur égale à l'épaisseur E3 d'un élément 3. Des plaques de recouvrement 5, parallèles aux plaques de fixation 4, définissent la couche externe à l'avant, en s'étendant entièrement en dehors de la couche isolante 6.

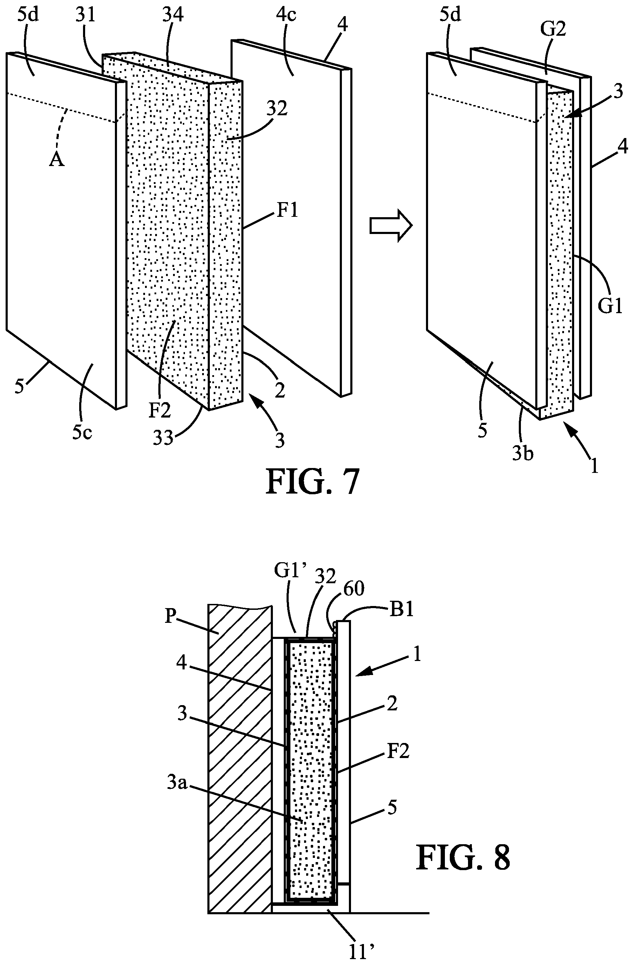

En référence à la figure 7, les plaques de fixation 4 forment typiquement une face plane 4c sur laquelle la face principale arrière F1 d'un élément 3 est collée ou fixée sans perçage de la face F1. Dans une variante de réalisation, la plaque inclut une articulation formée par une ligne de pliage. Ceci peut permettre d'inspecter la face F2 de l'élément PIV à l'issue de l'installation et ultérieurement, afin de contrôler l'intégrité de l'enveloppe barrière 2.

Comme illustré sur la figure 7, la plaque 5 se décompose en deux pièces complémentaires (au lieu d'être monobloc) :
- un organe fixe 5d attaché contre la face F2 par collage, par exemple pour délimiter la gorge G2 avec l'extrémité correspondante en saillie de la plaque de fixation 4 ; et
- un élément de plaque 5c amovible par rapport à l'élément 3, qui se fixe par encliquetage à l'organe fixe 5d, ici le long d'une ligne de jonction A (qui peut présenter sensiblement la même position que la ligne de pliage utilisée dans l'autre variante, cette ligne de jonction A étant ici parallèle à deux tranches, par exemple les deux tranches latérales 33, 34) .

Le bord d'insertion de l'élément de plaque 5c amovible peut éventuellement être biseauté et/ou formé en saillie un épaulement pour se glisser en partie sous le bord d'attache de l'organe fixe 5d. Des projections et/ou au moins une nervure allongée, coopérant dans des creux complémentaires, peuvent permettre de maintenir l'élément de plaque 5c accolé contre la face F2. L'encliquetage correspond à un mode de fixation amovible. Alternativement ou en complément, on peut utiliser une fixation amovible par aimantation, par utilisation d'au moins une bande de type velcro®, ou une combinaison de ces dispositions. De la mousse, autre matériau compressible, ou une mince bande de protection peut être utilisée le cas échéant à l'arrière du bord d'insertion ou sur la totalité de la face arrière de l'élément de plaque 5c pour éviter un contact agressif contre la face F2 définie par l'enveloppe barrière 2. Le ou les éléments de plaque 5c peuvent le cas échéant être posés dans une étape de fin d'installation, après avoir formée la couche isolante 6.

Chaque panneau composite 1 peut présenter une composition en trois couches. Dans l'application de doublage illustrée sur la figure 5, chaque plaque de fixation 4 est placée entre la paroi P et la couche isolante 6 formée par les éléments isolants 3. On peut voir que les plaques de recouvrement 5 peuvent présenter une finition, ce qui évite de fixer une couche supplémentaire ou un quelconque parement additionnel.

Ici, les éléments super isolants 3 sont directement pris en sandwich entre la plaque de fixation 4 et la plaque de recouvrement 5 (qui peut former une plaque de finition), en formant un système d'emboîtement intégré. A titre d'exemple non limitatif, les plaques de fixation 4 et les plaques de recouvrement 5 sont maintenues solidaires contre une face externe respective d'un élément 3 super isolant, par une colle sans solvant.

Dans un premier mode de réalisation comme illustré sur la figure 1, au moins une des quatre tranches de l'élément 3, ici la tranche supérieure 32, est entièrement en retrait par rapport aux bords adjacents B1, B2 définis respectivement par l'extrémité supérieure (bord libre B2) de la plaque de fixation 4 et l'extrémité supérieure (bord libre B1) de la plaque de recouvrement 5. On forme ainsi une gorge G1 qui peut recevoir l'extrémité saillante 3b d'un panneau composite 1 complémentaire. On comprend que, à l'état assemblé des panneaux composites 1, la jonction J5 entre les plaques de recouvrement 5 est située à un niveau différent de la jonction entre les éléments 3, ce qui tend à limiter les ponts thermiques. Il peut être avantageux d'avoir directement accès à cette jonction, pour faciliter un processus de démontage des panneaux composites 1. La jonction J5 est optionnellement visible de l'extérieur.

L'extrémité saillante 3b est définie ici par un élément 3 super isolant en saillie de ce côté par rapport à un bord libre 4a de la plaque de recouvrement 4 et à un bord libre 5a de la plaque de fixation 5. L'expression « bord libre » signifie ici que ce type de bord n'est pas recouvert à l'état non assemblé du panneau composite 1. Dans l'état assemblé, les bords libres B1 et 5a se rejoignent et il en va de même pour les bords libres B2 et 4a.

Plus généralement, on forme au moins deux reliefs d'emboîtement pour les panneaux composites 1, l'un situé du côté d'un premier bord externe la du panneau composite 1 et l'autre situé du côté d'un deuxième bord externe 1b opposé au premier bord externe la.

En référence aux figures 1 et 5, on prévoit optionnellement au moins un profilé 11 à section en U ou éventuellement en L, rigidement fixé à un substrat du bâtiment pour supporter le bas d'une première rangée horizontale R0. Les bords inférieurs des panneaux composites 1 de cette rangée R0 peuvent être entièrement logés dans une cavité définie par ce profilé 11. Dans ce cas la largeur du profilé 11 est adaptée pour recevoir les trois couches du panneau 1 et le profilé 11 peut être visible en bas de la face externe 50 commune typiquement définie par les plaques de recouvrement 5. En variante et comme illustré sur la figure 1 en particulier, le profilé 11 peut former une cavité C11 dont la largeur est inférieure à l'épaisseur E1 des panneaux composites 1, afin de recevoir sélectivement des extrémités en saillie 3b définies par les éléments isolants 3 (ici du côté du bord inférieur des panneaux 1).

Pour un panneau composite 1 qui forme une extrémité de rangée, on peut éventuellement supprimer le relief d'emboîtement et le panneau composite 1 peut définir une unique face (par exemple face inférieure) sensiblement plane destinée à venir en appui contre un substrat du bâtiment, par exemple un plancher.

Par l'effet d'emboîtement, on facilite la pose des panneaux composites 1 (assemblés comme des modules) et on obtient dans la couche isolante 6 une continuité dans la performance d'isolation, puisque les éléments 3 adjacents sont jointifs sans couche intercalaire entre leurs tranches 31, 32 dans cette couche isolante 6. Les autres tranches 33 et 34, visibles sur la figure 7 (correspondant à des tranches latérales à l'état monté comme montré sur la figure 5), peuvent aussi s'engager l'une contre l'autre de façon similaire.

Pour simplifier la pose et l'obtention des jonctions bord à bord, on préfère utiliser dans une même rangée R1 ou R2 des plaques de fixation 4 et des plaques de recouvrement 5 qui ont les mêmes dimensions externes au sein d'un panneau composite 1 donné, et qui ont au moins une dimension (autre que l'épaisseur) en commun au sein d'une même rangée R1 ou R2.

Bien que les figures 1-2, 4B et 6, illustrent la formation de gorges G1, G2, G3 bordées par des bords saillants du côté arrière et du côté avant, on comprend que ce type de gorges peut aussi être formé sans décalage entre les extrémités de l'élément 3 de type PIV et la périphérie de la plaque de fixation 4. En référence à la figure 8, on a ainsi un panneau composite 1 emboîté sur un profilé inférieur 11' à section en L, dans lequel seule la plaque de recouvrement 5 est décalée par rapport à l'ensemble bicouche formé par l'élément isolant 3 et la plaque de fixation 4. La gorge G1' est délimitée entre la paroi P et l'extrémité supérieure de la plaque de recouvrement 5, le fond de cette gorge G1' étant ici défini par la tranche 32 de l'élément 3.

Une couche de mousse 60, de matériau compressible, ou une mince bande de protection, d'épaisseur inférieure ou égale à 3 ou 4 mm, peut le cas échéant recouvrir la tranche 32 afin de la protéger. De préférence, on peut fixer ce type de protection directement sur les plaques 4 et/ou 5, dans la gorge G1 comme illustré sur la figure 1. En référence à la figure 6, une couche de mousse 60 ou analogue recouvre les parties saillantes de la ou des plaques 4 et/ou 20 dans un module 22 ou 22'. Dans le cas de la figure 8, seule la plaque de recouvrement spécifique 20 peut être localement recouverte du film de mousse 60.

En référence à la figure 2, on comprend que la plaque de fixation 4 peut être avantageusement plus mince que la plaque de recouvrement 5. Le ratio entre l'épaisseur E4 (côté arrière) et l'épaisseur E5 de la plaque de recouvrement peut être compris par exemple entre 1,1 et 2. L'épaisseur E5 de la plaque de recouvrement 5 peut être comprise entre 3 et 20 mm, de préférence entre 5 et 15 mm tout en étant plus élevée que l'épaisseur E4 de la plaque de fixation 4.

On peut former des rangées et verrouiller la position emboîtée entre panneaux 1 adjacents par utilisation d'un bord à section concave pour l'un parmi les bords libres 5a et B1. Dans l'exemple de la figure 2, la plaque de recouvrement 5 comporte ainsi un bord 5a, adjacent à l'extrémité 3b, de section concave pour former une rainure R. Plus généralement, une telle rainure R peut être formée en position adjacente à l'un des deux reliefs d'emboîtement 3b, G1 et est engagée par un bord complémentaire de section convexe appartenant à une plaque de recouvrement 5 adjacente, du côté de l'autre des deux reliefs d'emboîtement G1, 3b.

On illustre ici seulement le cas où l'épaisseur de la couche isolante 6 est définie par l'épaisseur E3 d'un élément 3 super isolant. Toutefois, il est bien entendu permis de former au moins deux couches de tels éléments 3 (à titre d'exemple non limitatif deux éléments de 20 mm d'épaisseur chacun peuvent être utilisés pour remplir une partie de l'espace intérieur formé entre la plaque de fixation 4 et la plaque de recouvrement 5). Cependant l'épaisseur totale E1 du panneau composite 1 est de préférence très inférieure à 100 mm afin de minimiser l'encombrement, par exemple inférieure à 60 mm, et de préférence inférieure ou égale à 50 mm. Une épaisseur E1 inférieure ou égale à 40 mm est plus particulièrement intéressante, et ce faible niveau d'épaisseur peut être aisément atteint pour des applications de doublage d'une paroi P de bâtiment qui est plane.

Comme illustré sur les figures 1 et 3, les panneaux composites 1 peuvent s'emboîter directement entre eux, sans recours à des éléments intermédiaires. L'ossature peut seulement consister en des supports, ici des profilés 11, 12 et un élément mâle 13, bordure d'insertion ou tasseau qui sont placés à la périphérie de la doublure (donc en marge par rapport à la face externe 50 commune).

De préférence, les profilés de support 11 sont formés chacun d'un seul bloc en matière plastique, par exemple en polyamide, en PVC, résine de polyuréthane ou encore à base de matériaux composites, de fibres de verre, éventuellement avec des particules métalliques (par exemple polyamide PA 66 chargé à 25% de fibres de verre). Les profilés inférieurs de support 11 et les autres profilés 12 ou éléments mâles 13 (certains optionnels) peuvent être réalisés avec le même type de matière. A titre d'exemple non limitatif, chacun de ces éléments de l'ossature a ici une conductivité thermique inférieure ou égale à 0,6 W m⁻¹ K⁻¹ et de préférence inférieure à 0,2 ou 0,25 W m⁻¹ K⁻¹. Afin de minimiser la conduction de chaleur en périphérie de la couche isolante 6 formée par les éléments 3 super isolants, une conductivité thermique inférieure ou égale à 0,18 W m⁻¹ K⁻¹ est préférée pour le matériau de ces éléments.

En référence aux figures 3 et 5, les plaques de recouvrement 5 du système 10 constituent ici un ensemble monocouche adapté pour recouvrir la couche isolante 6 et définir une face commune 50 orientée à l'opposé de la paroi P à doubler. On peut prévoir que les panneaux composites 1 constituent au moins une rangée R1 qui établit une continuité entre des éléments 3 de type PIV. Dans une rangée adjacente R0 qui est ici horizontale et située immédiatement sous la rangée R1, on prévoit au moins un module 22 qui se distingue des panneaux composites 1 en ce qu'il comporte :
- une plaque de recouvrement spécifique 20 avec une ouverture 24 et/ou une fonction de diffusion thermique ou lumineuse et qui borde directement un panneau composite 1 de la rangée R1, cette plaque de recouvrement spécifique 20 présentant de préférence une finition identique à celle de la plaque de recouvrement 5 adjacente des panneaux composites 1 voisins ; et
- une matière isolante à pression atmosphérique, sous forme d'une plaque 28, par exemple en plastique alvéolaire performant (polyuréthanne par exemple), recouverte par la plaque de recouvrement spécifique 20.

Optionnellement, ce type de module 22 permet le passage des fluides et énergies utilisés dans le bâtiment et complète le cas échéant le calepinage de la paroi P à isoler. On peut noter que la ou les ouvertures 23, 24 formées au travers du module 22 ne servent pas à un ancrage du système d'isolation thermique 10. Une ossature périphérique, qui comprend des profilés 11, 12 (ici à section en U ou en L) et/ou des éléments allongés tels que des tasseaux, est utilisée pour border tout ou partie de la rangée inférieure R0, de la rangée supérieure et d'au moins une rangée R2 à l'extrémité latérale du système 10.

En référence aux figures 3 et 5, le module 22 est engagé dans un profilé 11 inférieur de l'ossature, dans la cavité C11 définie par ce profilé inférieur 11 qui peut présenter une section en U ou en L. Une section en U peut être préférée pour s'assurer de la planéité de la doublure de paroi P, en particulier s'il existe des aspérités sur cette paroi P. De préférence, le profilé inférieur 11 est en contact avec la paroi P pour limiter l'épaisseur globale définie entre la paroi P et la face 50 externe du système 10. On comprend que ce type d'ossature peut permettre d'éviter de percer la paroi P à l'arrière des éléments 3 de type PIV.

Le module 22 comprend par exemple un évidement ou une découpe pour réaliser le passage ou l'intégration d'une liaison électrique, téléphonique, optique ou fluidique, permettant de faire fonctionner un organe fonctionnel 18 qui est intégré au moins en partie dans la plaque de recouvrement spécifique 20 ou optionnellement dans une plaque de recouvrement 5 adjacente (cas d'un organe fonctionnel 18 léger, par exemple de type éclairage à LED, supporté par la plaque 5 adjacente mais raccordée à une liaison qui traverse le module 22).

Dans un mode de réalisation, la liaison qui traverse le module 22 est un câble, une ligne ou un tuyau. Cette liaison traverse ainsi une couche d'isolation dans une zone qui n'est pas sous vide. Alternativement, on peut prévoir que la plaque de recouvrement spécifique 20 recouvre un élément de type PIV particulier et pourvu d'un orifice prévu dès sa conception (c'est-à-dire un orifice qui préexistait avant la mise sous vide).

On comprend qu'une fonction supplémentaire est avantageusement fournie par le système d'isolation thermique 10, en traversant très localement une matière isolante, c'est-à-dire sans créer des compartiments entiers non isolés au sein des rangées. Grâce à cette disposition, on peut équiper au moins une des rangées R0, R1, R2 avec au moins un dispositif choisi dans le groupe qui rassemble :
- les dispositifs lumineux du côté de la face externe 50 (côté visible) ;
- les éléments chauffants (par exemple par effet Joule) du côté de la face externe 50 ;
- les prises et dispositifs d'intégration de réseaux de communication ;
- les liaisons fluidiques.

Dans l'exemple des figures 4A-4B et 5, un module 22 ou un panneau 1 est placé dans la cavité C11 du profilé 11 et à l'intérieur d'un profilé vertical 12. Le module 22 ou la plaque de recouvrement 5 du panneau 1 peut le cas échéant être percé ou découpé sur place pour permettre d'installer l'organe fonctionnel 18, ici un ensemble de prises électriques.

En référence à la figure 4B, le module 22 peut présenter des gorges analogues et de mêmes dimensions que les gorges G1 et G2 présentes dans un panneau composite 1 de la rangée R1, illustré sur la figure 7. Ainsi l'emboîtement sur ce module 22 est aussi aisé, la tranche 31 à l'extrémité 3b en saillie pouvant venir directement en contact avec la matière isolante du module 22 en étant engagée dans la gorge G3.

Dans le module 22, il n'est pas nécessaire d'avoir recours à trois couches. Ainsi la plaque de fixation 4, présente dans les panneaux composites 1 voisins, peut être supprimée et les moyens d'emboîtement sont optionnellement formés par formation, lors de la conception de la plaque 28 de matière isolante, d'un relief sur la périphérie de la plaque en matière isolante. Dans l'exemple non limitatif représenté sur les figures 3 et 4B, le module 22 est ainsi bicouche.

Dans un mode de réalisation, la matière isolante du module 22 définit un élément SIPA (Super Isolant à Pression Atmosphérique), sous forme de plaque rigide incluant des aérogels de silice, ce qui permet d'obtenir aussi une conductivité thermique très faible dans cette partie du système (et proche de l'ordre de grandeur obtenu avec un élément PIV). L'élément SIPA, qui est ici en contact jointif avec des éléments 3 super isolants par une ou plusieurs tranches, a par exemple une conductivité thermique de l'ordre de 14 mW m⁻¹ K⁻¹.

Sur la figure 5, plusieurs modules 22, 22' sont ainsi intégrés dans le système d'isolation thermique 10 qui est peu épais, tout en offrant des fonctions qui ne sont pas fournies habituellement dans une couche isolante à base de super isolants. Bien que les exemples montrent le cas d'un module 22, 22' dont la partie isolante n'est pas sous vide, on comprend que cette partie isolante peut être enveloppée sous vide par une enveloppe barrière 2 qui soit s'étend autour d'un évidement ou d'un orifice traversant, soit délimite (à sa périphérie) une fente dont les dimensions correspondent à l'encombrement de l'organe fonctionnel 18.

Sur la figure 1 est représenté un doublage de paroi avec un tel système d'isolation thermique 10 qui inclut une seule couche d'éléments 3, avec une adaptation aisée à la configuration de la paroi P, malgré la présence d'une porte 51 et d'une fenêtre 52. La paroi P à revêtir peut être de toute nature, par exemple formée de briques ou parpaings jointoyés. En l'absence de vis, clous ou autres éléments traversant la couche isolante 6, les éléments super isolants 3 conservent un vide dans une configuration emboîtée au sein de rangées horizontales parallèles R0, R2.

Chaque évidement ou perçage traversant est intégré dans un module 22 ou 22' qui présente à la fois une plaque de recouvrement 20 analogue à celles des panneaux composites 1 (hormis sa découpe) et une plaque 28 de matière thermiquement isolante enveloppant l'évidement ou le perçage ajusté aux dimension de l'organe fonctionnel 18. On comprend que l'évidement ou la découpe pour l'organe fonctionnel 18, ici sous la forme d'un équipement de prise électrique, peut être obtenu au même moment que l'installation des panneaux composites 1, ce qui épargne avantageusement du temps pour les techniciens (on peut rénover en même temps l'installation électrique de cette façon) et évite d'avoir à réaliser des perçages au travers d'éléments 3 de type PIV.

Un des atouts du système d'isolation thermique 10 est de minimiser le temps de montage grâce à l'utilisation de reliefs pour l'emboîtement tout en proposant des panneaux composites 1 robustes et dont l'épaisseur est optimisée (pas de lame d'air). En outre, on évite l'intégration d'éléments de fixation (tasseaux, éléments d'ossature) qui s'insèrent entre les panneaux isolants de type PIV (avec une perte de performance thermique du fait des ponts thermiques).

On offre une solution très pertinente pour les chantiers de rénovation où des niveaux de résistance thermique très élevés sont demandés (typiquement 5,7 m².K/W, correspondant à des éléments PIV d'épaisseur 40 mm), qui impliqueraient des épaisseurs rédhibitoires en isolants traditionnels par l'intérieur (130 à 230 mm).

Il doit être évident pour les personnes versées dans l'art que la présente invention permet des modes de réalisation sous de nombreuses autres formes spécifiques sans l'éloigner du domaine d'application de l'invention comme revendiqué.

Ainsi, bien que la face externe 50 soit homogène, de préférence opaque, on peut utiliser alternativement une ou plusieurs des plaques de recouvrement 5 externes qui sont au moins partiellement transparentes ou translucides. Dans une forme de réalisation, une couche de finition peut être accolée contre la face externe 50 commune en incluant des éléments opaques au moins en partie détachables. Lorsque les plaques de recouvrement 5 sont transparentes, ceci permet d'inspecter visuellement un état fonctionnel des éléments isolants 3 dans une configuration au moins partiellement détachée des éléments opaques. En cas d'aspect anormal de la surface de l'enveloppe barrière 2, représentatif de la perte du vide à l'intérieur du panneau isolant, on peut envisager de démonter une partie du système d'isolation thermique 10.

Il peut être prévu un profilé 12 vertical ou autre élément de l'ossature qui comprend une partie mobile ou amovible pour faciliter ce démontage. A titre d'exemple, le profilé 12 à section en U illustré sur la figure 3 peut être remplacé par une combinaison d'un profilé en L et d'un dispositif de fixation amovible. Ce dispositif de fixation consiste par exemple en un profilé récepteur formant un logement (délimité entre deux branches) pour une partie d'insertion (languette, forme en relief ou patte d'insertion) formée par le profilé à section en L.

## Revendications

1. Système d'isolation thermique (10) destiné à recouvrir une paroi (P) d'un bâtiment, comportant des panneaux composites (1) emboîtables et définissant quatre bords, de façon à définir des rangées (R1 ; R2) dont une rangée déterminée (R1) dans laquelle chacun des panneaux composites (1) a une périphérie latérale et comprend un ensemble tri-couche, l'ensemble tri-couche définissant la périphérie latérale et incluant :
- un élément isolant (3) qui conserve un vide, ayant une forme de plaque avec quatre côtés ou tranches (31, 32, 33, 34) dont deux côtés opposés parallèles, l'élément comprenant un matériau poreux (3a) résistant à la compression, de préférence rigide, et une enveloppe barrière externe (2) étanche aux gaz, fermée sous vide, qui renferme le matériau poreux (3a) ;
- une plaque de fixation (4), rigide, destinée à être placée entre la paroi (P) et une couche isolante (6) formée par les éléments isolants (3), la plaque de fixation (4) s'étendant entièrement en dehors de la couche isolante (6) ;
- une plaque de recouvrement (5) parallèle à la plaque de fixation (4), s'étendant entièrement en-dehors de la couche isolante (6); et
- des moyens d'emboîtement formés sur au moins une partie de la périphérie latérale du panneau composite (1) ;
les plaques de recouvrement (5) du système constituant un ensemble monocouche adapté pour recouvrir la couche isolante (6) et définir une face externe (50) commune orientée à l'opposé de la paroi (P), **caractérisé en ce que** dans la rangée déterminée ou dans une rangée adjacente, le système étant pourvu d'une plaque de recouvrement spécifique (20), qui recouvre une matière thermiquement isolante de conductivité inférieure ou égale à 50 mW m⁻¹ K⁻¹ et comprenant :
- un évidement ou une découpe pour une liaison électrique, téléphonique, optique ou fluidique, permettant de faire fonctionner un organe fonctionnel (18) qui est intégré au moins en partie dans la plaque de recouvrement spécifique (20) ou dans une plaque de recouvrement adjacente ; et
- un bord de jonction (20a) en contact avec un panneau composite (1) de la rangée déterminée, et **en ce que** la plaque de recouvrement (5) se décompose en deux pièces complémentaires, comprenant : - un organe fixe (5d) contre une face (F2) de l'élément isolant (3) ; et - un élément de plaque (5c) amovible par rapport à l'élément isolant (3).

2. Système d'isolation thermique selon la revendication 1, dans lequel les éléments isolants (3) sont jointifs sans couche intercalaire entre leurs tranches (31, 32, 33) dans la couche isolante (6), les plaques de fixation (4) et les plaques de recouvrement (5) étant maintenues solidaires contre une face externe (F1, F2) d'un des éléments isolants (3) par une colle sans solvant.

3. Système d'isolation thermique selon la revendication 1 ou 2, dans lequel les moyens d'emboîtement comprennent au moins deux reliefs d'emboîtement (G1, 3b), l'un (3b) situé du côté d'un premier bord externe (1a) du panneau composite (1) et défini par un positionnement en saillie d'un élément isolant (3) par rapport à un bord libre (4a) de la plaque de recouvrement (4) et à un bord libre (5a) de la plaque de fixation (5), et l'autre (G1) situé du côté d'un deuxième bord externe (1b) du panneau composite (1) opposé au premier bord externe (1a).

4. Système d'isolation thermique selon la revendication 3, dans lequel le relief d'emboîtement (G1) situé du côté du deuxième bord externe (1b) est défini par un positionnement en retrait de l'élément isolant (3) par rapport à un bord libre (B1) de la plaque de recouvrement (5) et à un bord libre (B2) de la plaque de fixation (4).

5. Système d'isolation thermique selon la revendication 3 ou 4, dans lequel dans les panneaux composites (1) de la rangée déterminée, la plaque de recouvrement (5) comporte :
- un bord (5a) de section concave pour former une rainure (R), en position adjacente à l'un des deux reliefs d'emboîtement (3b), et
- un bord (B1) de section convexe pour s'engager dans une rainure (R) d'une plaque de recouvrement adjacente (5), le bord (B1) de section convexe étant formé du côté de l'autre des deux reliefs d'emboîtement (G1).

6. Système d'isolation thermique selon l'une quelconque des revendications précédentes, comprenant un câble, une ligne ou un tuyau qui traverse une couche d'isolation au moins en partie définie par les panneaux composites (1), et définit tout ou partie de ladite liaison.

7. Système d'isolation thermique selon l'une quelconque des revendications précédentes, dans lequel la plaque de recouvrement (5) est transparente ou translucide pour au moins un des panneaux composites (1).

8. Système d'isolation thermique selon l'une quelconque des revendications précédentes, dans lequel la plaque de recouvrement (5) a une épaisseur comprise entre 3 et 20 mm et est de préférence plus épaisse que la plaque de fixation.

9. Système d'isolation thermique selon l'une quelconque des revendications précédentes, comprenant un profilé (11) à section en U ou en L, rigidement fixé à un substrat du bâtiment, le profilé (11) formant une cavité (C11) dont la largeur est inférieure à l'épaisseur (E1) des panneaux composites (1), afin de recevoir sélectivement des extrémités en saillie (3b) définies par les éléments isolants (3).

10. Système d'isolation thermique selon l'une quelconque des revendications 1 à 9, dans lequel la face externe (50) commune est plane et définit une finition, les plaques de recouvrement (5) étant rigides et choisies dans au moins un parmi les matériaux suivants :
- mélaminé ;
- verre,
- bois,
- revêtement plastique,
- brique,
- pierre,
- céramique.

11. Système d'isolation thermique selon l'une quelconque des revendications 1 à 10, comprenant une couche de finition accolée contre la face externe (50) commune et qui présente des éléments opaques au moins en partie détachables, les plaques de recouvrement (5) étant transparentes pour permettre d'inspecter visuellement un état fonctionnel des éléments isolants (3) dans une configuration au moins partiellement détachée des éléments opaques.

12. Procédé de montage d'un système d'isolation thermique (10) selon l'une quelconque des revendications précédentes, pour recouvrir une paroi (P) d'un bâtiment à partir de panneaux composites (1) emboîtables et définissant quatre bords, le procédé comportant les étapes consistant essentiellement à :
- fournir au moins une première série de panneaux composites pourvus chacun d'un élément isolant (3) ayant une forme de plaque avec quatre côtés ou tranches (31, 32, 33, 34) dont deux côtés opposés parallèles, l'élément isolant (3) comprenant un matériau poreux (3a) résistant à la compression, de préférence rigide, et une enveloppe barrière externe (2) étanche aux gaz, fermée sous vide, qui renferme le matériau poreux (3a), sachant qu'une première face (F1) de l'élément isolant (3) est protégée par une plaque de fixation (4), rigide, destinée à être placée entre la paroi (P) et une couche isolante (6) formée par les éléments isolants, tandis qu'une deuxième face (F2) de l'élément isolant (3) est protégée par une plaque de recouvrement (5) parallèle à la plaque de fixation (4), ladite plaque de recouvrement (5) se décomposant en deux pièces complémentaires, comprenant un organe fixe (5d) contre ladite deuxième face (F2) de l'élément isolant (3), et un élément de plaque (5c) amovible par rapport à l'élément isolant (3) ;
- emboîter entre eux les panneaux composites (1) de la première série, par engagement entre des reliefs d'emboîtement (G1, G2, G1', 3b) de type fente et languette, l'un au moins des reliefs d'emboîtement (3b) étant défini par un positionnement en saillie d'un élément isolant (3) par rapport à un bord libre (5a) de la plaque de recouvrement (5) et/ou à un bord libre (4a) de la plaque de fixation (4) dans le même panneau composite (1), de façon à former une rangée déterminée tricouche (R1) ;
- définir à l'aide des plaques de recouvrement (5) de la rangée déterminée (R1) une face externe (50) commune qui s'étend parallèlement à la paroi (P) à recouvrir ; et
- dans la rangée déterminée (R1) ou dans une rangée adjacente, utiliser une plaque de recouvrement spécifique (20), qui recouvre une matière isolante thermiquement isolante de conductivité inférieure ou égale à 50 mW m⁻¹ K⁻¹ et dans laquelle un évidement ou une découpe pour une liaison électrique, téléphonique, optique ou fluidique, est formé pour installer un organe fonctionnel (18) qui est de préférence intégré au moins en partie dans la plaque de recouvrement spécifique (20) ou dans une plaque de recouvrement (5) adjacente ; et
- mettre en contact un bord de jonction (20a) de la plaque de recouvrement spécifique (20) avec un panneau composite (1) de la rangée déterminée (R1).

## Patentansprüche

1. Wärmedämmsystem (10), welches dazu bestimmt ist, eine Wand (P) eines Gebäudes zu bedecken, und Verbundpaneele (1) umfasst, die zusammensteckbar sind und vier Ränder definieren, so dass Reihen (R1; R2) definiert werden, darunter eine bestimmte Reihe (R1), in welcher jedes der Verbundpaneele (1) einen seitlichen Umfang aufweist und eine dreischichtige Anordnung umfasst, wobei die dreischichtige Anordnung den seitlichen Umfang definiert und enthält:
- ein Dämmelement (3), welches ein Vakuum aufrechterhält und eine Form einer Platte mit vier Seiten oder Schnitträndern (31, 32, 33, 34) aufweist, darunter zwei parallele gegenüberliegende Seiten, wobei das Element ein poröses Material (3a), das druckfest und vorzugsweise starr ist, und eine gasdichte, unter Vakuum verschlossene äußere Barrierehülle (2), welche das poröse Material (3a) einschließt, umfasst;
- eine starre Befestigungsplatte (4), die dazu bestimmt ist, zwischen der Wand (P) und einer Dämmschicht (6) angeordnet zu werden, die von den Dämmelementen (3) gebildet wird, wobei sich die Befestigungsplatte (4) vollständig außerhalb der Dämmschicht (6) erstreckt;
- eine zu der Befestigungsplatte (4) parallele Deckplatte (5), die sich vollständig außerhalb der Dämmschicht (6) erstreckt; und
- Steckmittel, die auf wenigstens einem Teil des seitlichen Umfangs des Verbundpaneels (1) ausgebildet sind;
wobei die Deckplatten (5) des Systems eine einschichtige Anordnung bilden, die dafür ausgelegt ist, die Dämmschicht (6) zu bedecken und eine gemeinsame Außenseite (50) zu definieren, die von der Wand (P) abgewandt ist,
**dadurch gekennzeichnet, dass** in der bestimmten Reihe oder in einer benachbarten Reihe das System mit einer speziellen Deckplatte (20) versehen ist, welche ein wärmedämmendes Material mit einer spezifischen Wärmeleitfähigkeit, die kleiner oder gleich 50 mW·m⁻¹·K⁻¹ ist, bedeckt und umfasst:
- eine Ausnehmung oder einen Ausschnitt für eine elektrische, telefonische, optische oder fluidische Verbindung, die den Betrieb eines funktionalen Organs (18) ermöglicht, welches wenigstens teilweise in die spezielle Deckplatte (20) oder in eine benachbarte Deckplatte integriert ist; und
- einen Verbindungsrand (20a), der sich mit einem Verbundpaneel (1) der bestimmten Reihe in Kontakt befindet,
und dadurch, dass sich die Deckplatte (5) aus zwei komplementären Teilen zusammensetzt, welche umfassen:
- ein festes Glied (5d) an einer Seite (F2) des Dämmelements (3); und
- ein von dem Dämmelement (3) lösbares Plattenelement (5c).

2. Wärmedämmsystem nach Anspruch 1, wobei die Dämmelemente (3) aneinanderstoßen, ohne Zwischenschicht zwischen ihren Schnitträndern (31, 32, 33) in der Dämmschicht (6), wobei die Befestigungsplatten (4) und die Deckplatten (5) durch einen lösungsmittelfreien Kleber fest anliegend an einer Außenseite (F1, F2) eines der Dämmelemente (3) gehalten werden.

3. Wärmedämmsystem nach Anspruch 1 oder 2, wobei die Steckmittel wenigstens zwei steckbare Reliefs (G1, 3b) umfassen, wobei eines (3b) sich auf der Seite eines ersten äußeren Randes (1a) des Verbundpaneels (1) befindet und durch eine vorstehende Positionierung eines Dämmelements (3) bezüglich eines freien Randes (4a) der Deckplatte (4) und eines freien Randes (5a) der Befestigungsplatte (5) definiert ist und das andere (G1) sich auf der Seite eines zweiten äußeren Randes (1b) des Verbundpaneels (1) befindet, der dem ersten äußeren Rand (1a) gegenüberliegt.

4. Wärmedämmsystem nach Anspruch 3, wobei das steckbare Relief (G1), das sich auf der Seite des zweiten äußeren Randes (1b) befindet, durch eine zurückgesetzte Positionierung des Dämmelements (3) bezüglich eines freien Randes (B1) der Deckplatte (5) und eines freien Randes (B2) der Befestigungsplatte (4) definiert ist.

5. Wärmedämmsystem nach Anspruch 3 oder 4, wobei in den Verbundpaneelen (1) der bestimmten Reihe die Deckplatte (5) aufweist:
- einen Rand (5a) mit konkavem Querschnitt zum Bilden einer Nut (R) in einer Position, die zu einem der zwei steckbaren Reliefs (3b) benachbart ist, und
- einen Rand (B1) mit konvexem Querschnitt zum Eingreifen in eine Nut (R) einer benachbarten Deckplatte (5), wobei der Rand (B1) mit konvexem Querschnitt auf der Seite des anderen der zwei steckbaren Reliefs (G1) ausgebildet ist.

6. Wärmedämmsystem nach einem der vorhergehenden Ansprüche, welches ein Kabel, eine Leitung oder einen Schlauch umfasst, das, die bzw. der eine Dämmschicht durchquert, die wenigstens teilweise durch die Verbundpaneele (1) definiert ist, und die gesamte Verbindung oder einen Teil derselben definiert.

7. Wärmedämmsystem nach einem der vorhergehenden Ansprüche, wobei die Deckplatte (5) für wenigstens eines der Verbundpaneele (1) durchsichtig oder durchscheinend ist.

8. Wärmedämmsystem nach einem der vorhergehenden Ansprüche, wobei die Deckplatte (5) eine Dicke zwischen 3 und 20 mm aufweist und vorzugsweise dicker als die Befestigungsplatte ist.

9. Wärmedämmsystem nach einem der vorhergehenden Ansprüche, welches ein Profilelement (11) mit U- oder L-förmigem Querschnitt umfasst, das starr an einem Substrat das Gebäudes befestigt ist, wobei das Profilelement (11) einen Hohlraum (C11) bildet, dessen Breite kleiner als die Dicke (E1) der Verbundpaneele (1) ist, um selektiv vorstehende Enden (3b) aufzunehmen, die durch die Dämmelemente (3) definiert sind.

10. Wärmedämmsystem nach einem der Ansprüche 1 bis 9, wobei die gemeinsame Außenseite (50) eben ist und eine Fertigbearbeitung definiert, wobei die Deckplatten (5) starr sind und aus wenigstens einem der folgenden Materialien ausgewählt sind:
- Melaminharz;
- Glas,
- Holz,
- Kunststoffbeschichtung,
- Ziegel,
- Stein,
- Keramik.

11. Wärmedämmsystem nach einem der Ansprüche 1 bis 10, welches eine Deckschicht umfasst, die an die gemeinsame Außenseite (50) angefügt ist und die undurchsichtige Elemente aufweist, die wenigstens teilweise ablösbar sind, wobei die Deckplatten (5) durchsichtig sind, um in einer wenigstens teilweise abgelösten Konfiguration der undurchsichtigen Elemente zu ermöglichen, einen Funktionszustand der Dämmelemente (3) einer Sichtprüfung zu unterziehen.

12. Verfahren zur Anbringung eines Wärmedämmsystems (10) nach einem der vorhergehenden Ansprüche, um eine Wand (P) eines Gebäudes ausgehend von Verbundpaneelen (1), die zusammensteckbar sind und vier Ränder definieren, zu bedecken, wobei das Verfahren im Wesentlichen die folgenden Schritte umfasst:
- Bereitstellen wenigstens einer ersten Serie von Verbundpaneelen, die jeweils mit einem Dämmelement (3) versehen sind, das eine Form einer Platte mit vier Seiten oder Schnitträndern (31, 32, 33, 34) aufweist, darunter zwei parallele gegenüberliegende Seiten, wobei das Dämmelement (3) ein poröses Material (3a), das druckfest und vorzugsweise starr ist, und eine gasdichte, unter Vakuum verschlossene äußere Barrierehülle (2), welche das poröse Material (3a) einschließt, umfasst, wobei eine erste Seite (F1) des Dämmelements (3) durch eine starre Befestigungsplatte (4) geschützt ist, die dazu bestimmt ist, zwischen der Wand (P) und einer Dämmschicht (6) angeordnet zu werden, die von den Dämmelementen (3) gebildet wird, während eine zweite Seite (F2) des Dämmelements (3) durch eine zu der Befestigungsplatte (4) parallele Deckplatte (5) geschützt ist, wobei sich die Deckplatte (5) aus zwei komplementären Teilen zusammensetzt, welche ein festes Glied (5d) an der zweiten Seite (F2) des Dämmelements (3) und ein von dem Dämmelement (3) lösbares Plattenelement (5c) umfassen;
- Zusammenstecken der Verbundpaneele (1) der ersten Serie durch Eingriff zwischen steckbaren Reliefs (G1, G2, G1', 3b) vom Typ von Schlitz-Zapfen-Verbindungen, wobei wenigstens eines der steckbaren Reliefs (3b) durch eine vorstehende Positionierung eines Dämmelements (3) bezüglich eines freien Randes (5a) der Deckplatte (5) und/oder eines freien Randes (4a) der Befestigungsplatte (4) in demselben Verbundpaneel (1) definiert ist, so dass eine dreischichtige bestimmte Reihe (R1) gebildet wird;
- Definieren, mithilfe der Deckplatten (5) der bestimmten Reihe (R1), einer gemeinsamen Außenseite (50), welche sich parallel zu der zu bedeckenden Wand (P) erstreckt; und
- in der bestimmten Reihe (R1) oder in einer benachbarten Reihe, Verwenden einer speziellen Deckplatte (20), welche ein wärmedämmendes Material mit einer spezifischen Wärmeleitfähigkeit, die kleiner oder gleich 50 mW·m⁻¹·K⁻¹ ist, bedeckt und in welcher eine Ausnehmung oder ein Ausschnitt für eine elektrische, telefonische, optische oder fluidische Verbindung ausgebildet ist, um ein funktionales Organ (18) zu installieren, welches vorzugsweise wenigstens teilweise in die spezielle Deckplatte (20) oder in eine benachbarte Deckplatte (5) integriert ist; und
- In Kontakt bringen eines Verbindungsrandes (20a) der speziellen Deckplatte (20) mit einem Verbundpaneel (1) der bestimmten Reihe (R1).

## Claims

1. A thermal insulation system (10) intended to cover a wall (P) of a building, containing composite interlocking panels (1) and defining four edges, so as to define rows (R1 ; R2) with one determined row (R1) in which each of the composite panels (1) has a side periphery and comprises a three-layer assembly, the three-layer assembly defining the side periphery and including :
- an insulating element (3) preserving a gap, in the form of a plate with four sides or sections (31, 32, 33, 34) including two parallel opposite sides, the element comprising a preferably rigid, compression-resistant porous material (3a), and a vacuum-sealed, gas-tight outer barrier shell (2) which encloses the porous material (3a) ;
- a rigid fixing plate (4) intended to be placed between the wall (P) and an insulating layer (6) formed by the insulating elements (3), the fixing plate (4) extending fully outside the insulating layer (6) ;
- a cover plate (5) which is parallel to the fixing plate (4), extending fully outside the insulating layer (6) ; and
- interlocking means formed on at least a portion of the side periphery of the composite panel (1) ; the cover plates (5) of the system composing a single-layer assembly adapted to cover the insulating plate (6) and define a common outer surface (50) facing away from the wall (P), **characterized in that** in the determined row or in an adjacent row, the system being equipped with a specific cover plate (20), which covers a thermally insulating material having a conductivity lower or equal to 50 mW m⁻¹ K⁻¹ and comprising :
- a recess or a cut for an electrical, telephone, optical or fluid connection, for operating a functional member (18) which is at least partly integrated in the specific cover plate (20) or in an adjacent cover plate ; and
- a joining edge (20a) in contact with a composite panel (1) from the determined row, and **in that** the cover plate (5) is divided into two complementary parts, comprising :
- a fixed member (5d) against a surface (F2) of the insulating element (3) ; and
- a plate element (5c) which is removable from the insulating element (3).

2. The thermal insulation system according to Claim 1, wherein the insulating elements (3) are joined without an interlayer between their sections (31, 32, 33) in the insulating layer (6), the fixing plates (4) and the cover plates (5) being held secured together against an outer face (F1, F2) of one of the insulating elements (3) by a solvent-free adhesive.

3. The thermal insulation system according to Claim 1 or 2, wherein the interlocking means comprise at least two interlocking reliefs (G1, 3b), one (3b) being located on the side of a first outer edge (1a) of the composite panel (1) and defined by a protruding disposition of an insulating element (3) from a free edge (4a) of the cover plate (4) and from a free edge (5a) of the fixing plate (5), and the other (G1) being located on the side of a second outer edge (1b) of the composite panel (1) opposite the first outer edge (1a).

4. The thermal insulation system according to Claim 3, wherein the interlocking relief (G1) located on the side of the second outer edge (1b) is defined by the positioning of the insulating element (3) behind a free edge (B1) of the cover plate (5) and behind a free edge (B2) of the fixing plate (4).

5. The thermal insulation system according to Claim 3 or 4, wherein in the composite panels (1) of the determined row, the cover plate (5) contains:
- an edge (5a) with a concave section to form a groove (R), positioned adjacent to one of the two interlocking reliefs (3b), and
- an edge (B1) with a convex section to engage in a groove (R) of an adjacent cover plate (5), the edge (B1) with a convex section being formed on the side of the other of the two interlocking reliefs (G1).

6. The thermal insulation system according to any of the previous claims, comprising a cable, a line, or a pipe which goes through an insulation layer at least partly defined by the composite panels (1), and defines all or part of said connection.

7. The thermal insulation system according to any of the previous claims, wherein the cover plate (5) is transparent or translucent for at least one of the composite panels (1).

8. The thermal insulation system according to any of the previous claims, wherein the cover plate (5) has a thickness between 3 and 20 mm and is preferably thicker than the fixing plate.

9. The thermal insulation system according to any of the previous claims, comprising a profile (11) with a U-shaped or L-shaped section, rigidly fixed to a substrate of the building, the profile (11) forming a cavity (C11) having a width smaller than the thickness (E1) of the composite panels (1), so as to selectively receive protruding ends (3b) defined by the insulating elements (3).

10. The thermal insulation system according to any of Claims 1 to 9, wherein the common outer surface (50) is flat and defines a finish, the cover plates (5) being rigid and selected from at least one of the following materials:
- melamine;
- glass,
- wood,
- plastic coating,
- brick,
- stone,
- ceramic.

11. The thermal insulation system according to any of Claims 1 to 10, comprising a finish layer placed against the common outer surface (50) and having opaque elements which are at least partly detachable, the cover plates (5) being transparent to allow a visual inspection of the functional status of the insulating elements (3) in a configuration which is at least partly detached from the opaque elements.

12. A method for mounting a thermal insulation system (10) according to any of the previous claims, for covering a building wall (P) using interlocking composite panels (1) defining four edges, the method containing the steps consisting essentially of:
- providing at least a first series of composite panels each equipped with an insulating element (3) in the form of a plate with four sides or sections (31, 32, 33, 34) including two parallel opposite sides, the isolating element comprising a preferably rigid, compression-resistant porous material (3a), and a vacuum-sealed, gas-tight outer barrier shell (2) which encloses the porous material (3a), knowing that a first face (F1) of the insulating element (3) is protected by a rigid fixing plate (4) intended to be placed between the wall (P) and an insulating layer (6) formed by the insulating elements, while a second face (F2) of the insulating element (3) is protected by a cover plate (5) which is parallel to the fixing plate (4), said cover plate (5) being divided into two complementary parts, comprising a fixed member (5d) against said second face (F2) of the insulating element (3), and a plate element (5c) which is removable from the insulating element (3).
- interlocking the composite panels (1) from the first series, via an engagement between the slot-type and tongue-type interlocking reliefs (G1, G2, G1', 3b), at least one of the interlocking reliefs (3b) being defined by a protrusion of an insulating element (3) from a free edge (5a) of the cover plate (5) and/or from a free edge (4a) of the fixing plate (4) in the same composite panel (1), so as to form a determined three-layer row (R1);
- defining, using the cover plates (5) from the determined row (R1), a common outer surface (50) which extends parallel to the wall (P) to cover; and
- in the determined row (R1) or in an adjacent row, using a specific cover plate (20), which covers a thermally insulating material having a conductivity lower or equal to 50 mW m⁻¹ K⁻¹ and in which a recess or a cut for an electrical, telephone, optical, or fluid connection, is formed in order to fit a functional member (18) which is preferably at least partly integrated in the specific cover plate (20) or in an adjacent cover plate (5) ; and
- bringing into contact a joining edge (20a) of the specific cover plate (20) with a composite panel (1) from the determined row (R1).
